# EUROPÄISCHE PATENTANMELDUNG

(11) **EP 2 405 102 A1**
(43) Veröffentlichungstag der Anmeldung: **11.01.2012**
(21) Anmeldenummer: 11161416.0
(22) Anmeldetag: 07.04.2011
(51) Int. Cl.: F01D 11/00, F02C 7/28, F16J 15/36, F16J 15/52, F01D 9/02

(54) **Gasturbine mit Balgdichtung**

(30) Priorität: 08.07.2010 DE 102010031124
(71) Anmelder: MAN Diesel & Turbo SE, 86153 Augsburg (DE)
(72) Erfinder: Aschenbruck, Emil, 47167 Duisburg (DE); Bennewa, Carsten, 46145 Oberhausen (DE); Rösner, Christian, 47475 Kamp-Lintfort (DE)

(57) **Zusammenfassung**

Strömungsmäschine (1) mit zwei Bauteilen (10, 20), die über eine Balgdichtung (30) miteinander in Zusammenwirkungung stehen, so dass die Balgdichtung (30) eine Mediensperre zwischen zwei an die beiden Bauteile (10, 20) abgrenzenden Räumen (40, 50) der Strömungsmaschine (1) bildet Gemäß der Erfindung ist die Strömungsmaschine (1) als Gasturbine ausgebildet, wobei ein Raum (40) der beiden Raume (40, 50) ein Heißgasraum eines Hochdruckteils der Gasturbine ist.

## Beschreibung

Die Erfindung betrifft eine Strömungsmaschine gemäß dem Oberbegriff des Anspruchs 1.

Eine Strömungsmaschine der eingangsgenannten Art ist z.B aus DE 1 751 075 A1 bekannt Bei der in diesem Dokument beschriebenen als Druckaustauscher ausgebildeten Strömungsmaschine stehen zwei Bauteile über eine Balgdichtung miteinander in Zusammenwirkung, so dass die Balgdichtung eine Mediensperre zwischen zwei an die beiden Bauteile angrenzenden Räumen der Strömungsmaschine bildet.

Der Erfindung liegt die Aufgabe zugrunde, eine neue Lösung für den Einsatz einer Balgdichtung in einer Strömungsmaschine bereitzustellen.

Dies wird mit einer Strömungsmaschine gemäß Anspruch 1 erreicht. Weiterbildungen der Erfindung sind in den abhängigen Ansprüchen definiert.

Gernäß der Erfindung weist eine Strömungsmaschine zwei Bauteile auf, die über eine Balgdichtung miteinander in Zusammenwirkung stehen, so dass die Balgdichtung eine Mediensperre zwischen zwei direkt an die beiden Bauteile angrenzenden Räumen der Strömungsmaschine bildet. Die erfindungsgemäße Strömungsmaschine zeichnet sich dadurch aus, dass die Strömungsmaschine als Gasturbine ausgebildet ist, wobei einer der beiden Räume ein Heißgasraum eines Hochdruckteils der Gasturbine ist.

Von den Erfindern wurde erkannt, dass die Dichtstelle direkt am Heiβgasraum eines Hochdruckteils einer Gasturbine sehr stark leckagegefährdet ist, da eine Ebenheit von Dichtflächen während des Betriebes der Gasturbine durch eine ungleichmäßige Umfangsverteilung im Hauptgasstrom nicht sichergestellt werden kann. Eine einmal aufgetretene Leckage hat zusätzlich eine verstärkende Wirkung auf die Unebenheit der Dichtflächen, so dass sich der Leckageeffekt steigert. Ferner besteht die Gefahr der Überhitzung von Dichtelementen und damit verbunden der Verlust von Vorspannung bzw. Dichtkraft der Dichtelemente.

Durch den erfindungsgemäßen Einsatz einer Balgdichtung in diesem Bereich kann Leckage zuverlässig vermieden werden.

Gemäß einer Ausführungsform der Erfindung ist der andere Raum der beiden Räume als Kühlluftraum des Hochdruckteils der Gasturbine ausgebildet.

Gemäß einer weiteren Ausführungsform der Erfindung weist die Balgdichtung einen ersten Endabschnitt, mit dem sie gegen ein erstes Bauteil der beiden Bauteile abdichtet, und einen zweiten Endabschnitt auf, mit dem sie gegen ein zweites Bauteil der beiden Bauteile abdichtet, wobei der erste Endabschnitt an dem ersten Bauteil befestigt ist, so dass eine verformungstolerante Verbindung hergestellt ist.

Durch die erfindungsgemäße Befestigung der Balgdichtung wird einerseits eine zuverlässige Lagesicherung für die Balgdichtung bereitgestellt und wird andererseits unter Beibehaltung einer guten Dichtqualität eine gewisse Verformung der Verbindung von Balgdichtung und erstem Bauteil und damit eine Anpassung der Balgdichtung an maschinenspezifische Parameter zugelassen.

Bevorzugt ist der erste Endabschnitt an das erste Bauteil angeschweißt, angelötet, angeschraubt und/oder angeklemmt.

Gemäß noch einer Ausführungsform der Erfindung dichtet der zweite Endabschnitt durch lediglichen auf axialer Vorspannung basierenden Flächenkontakt gegen das zweite Bauteil ab.

Auf diese Weise wird eine bewegungstolerante und dennoch mediendichte Verbindung zwischen Balgdichtung und zweitem Bauteil bereitgestellt.

Gemäß einer weiteren Ausführungsform der Erfindung ist der erste Endabschnitt in Form eines Flansches ausgebildet, der sich ausgehend von einem Außendurchmesser eines Faltenteils der Balgdichtung radial auswärts über den Außendurchmesser des Faltenteils hinaus erstreckt und auf einer sich radial erstreckenden Dichtfläche des ersten Bauteils aufliegt, wobei der zweite Endabschnitt in Form eines Flansches ausgebildet ist, der sich ausgehend vom Außendurchmesser des Faltenteils entgegengesetzt zum ersten Endabschnitt radial einwärts erstreckt und auf einer sich radial erstreckenden Dichtfläche des zweiten Bauteils aufliegt.

Mit dieser Ausgestaltung des ersten Endabschnitts ist dieser besonders einfach und bequem fest an das erste Bauteil montierbar, Der zweite Endabschnitt liegt innerhalb des Außendurchmessers des Faltenteils und ist damit gegen Beschädigungen geschützt.

Gemäß noch einer Ausführungsform der Erfindung weist der erste Endabschnitt einen sich axial erstreckenden Verbindungsabschnitt auf, der stoffschlüssig mit dem Faltenteil verbunden ist, wodurch zwischen dem Faltenteil und der Dichtfläche des ersten Bauteils ein Zwischenraum gebildet ist.

Mit dem Verbindungsabschnitt wird ein Hebelarm bereitgestellt, so dass sich der erste Endabschnitt bei axialer Belastung der Balgdichtung in gewissem Ausmaß im Bereich des Verbindungsabschnitts verformen kann und damit Verformungstoleranz bereitstellt.

Gemäß noch einer weiteren Ausführungsform der Erfindung schließt sich an die Dichtfläche des zweiten Bauteils eine Stützfläche bzw. Führungsfläche an, die Sich axial in Richtung zum ersten Bauteil hin erstreckt, so dass die Stützfläche eine radial einwärtige Abstützung für den Faltenteil bereitstellt.

Damit werden bei axialem Zusammenschieben der Balgdichtung zuverlässig ein radiales Ausknicken des Faltenteils der Balgdichtung und damit eine Beeinträchtigung der Vorspannung und der Dichtwirkung vermieden. Ferner stellt die Stützfläche eine axiale Führung für die Balgdichtung bereit.

Gemäß noch einer Ausführungsform der Erfindung erstrecken sich die Dichtfläche des zweiten Bauteils, die Stützfläche und die Dichtfläche des ersten Bauteils derart, dass sie gemeinsam eine U-förmige umlaufende Aufnahmetasche für den Faltenteil der Balgdichtung bilden.

Auf diese Weise ist der Faltenteil der Balgdichtung so aufgenommen, dass er noch zuverlässiger gegen Beschädigungen und axiales Ausknicken geschützt ist.

Gemäß einer weiteren Ausführungsform der Erfindung ist das erste Bauteil von einem Leitschaufelträger und/oder einem Dichtungsträger des Hochdruckteils der Gasturbine gebildet.

Im Fazit wird ein erfindungsgemäßes Dichtungssystem in Form einer Balgdichtung im Hochdruckteil einer Gasturbine zur Kompensation großer axialer Dichtspaltveränderungen eingesetzt, wobei durch eine definierte Vorspannung und Delta p die Dichtheit der beiden Bauteile von dem einen Raum (Heißgasraum) zu dem anderen Raum(Kühlluftraum) erreicht wird.

Als eine erfindungsgemäße Lösung wird eine verformungstolerante Verbindung der beiden Dichtungselemente (Balgdichtung und Leitschaufelträger) unter Beibehaltung einer guten Dichtqualität bereitgesteilt. Hierzu werden drei Möglichkeiten vorgeschlagen: Anschweißen der Balgdichtung an den Leitschaufelträger, wobei die Balggeometrie darauf ausgebildet ist, dass die Bauteile und die Schweißnaht ein Minimum an Spannungen ertragen müssen: Auflöten der Balgdichtung; und/oder Schrauben-/ Klemmverbindung zwischen Balgdichtung und Leitschaufelträger

Im Folgenden wird die Erfindung anhand einer bevorzugten Ausführungsform und unter Bezugnahme auf die beigefügte Figur detaillierter beschrieben.

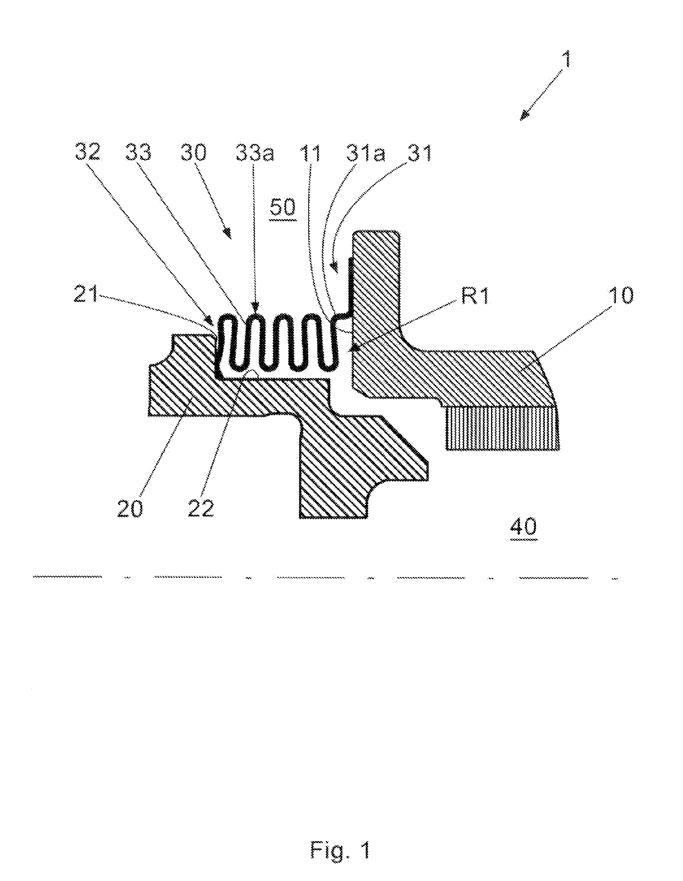

- Fig.1: zeigt eine schematische Schnittansicht eines Teils einer Strömungsmaschine gemäß einer Ausführungsform der Erfindung.

Fig.1 zeigt in schematischer Schnittansicht einen Teil einer als Gasturbine ausgebildeten Strömungsmaschine 1 gemäß einer Ausführungsform der Erfindung.

Die Strömungsmaschine 1 weist ein erstes Bauteil 10 und ein zweites Bauteil 20 auf, die über eine Balgdichtung 30 miteinander in Zusammenwirkung stehen, so dass die Balgdichtung 30 eine Mediensperre zwischen einem direkt an die beiden Bauteile 10, 20 angrenzenden Heißgasraum 40 eines Hochdruckteils (nicht separat bezeichnet) der Strömungsmaschine 1 und einem direkt an die beiden Bauteile 10. 20 angrenzenden Kühlluftraum 50 des Hochdruckteils der Strömungsmaschine 1 bildet.

Das erste Bauteil 10 ist von einem Leitschaufelträger des Hochdruckteils der Strömungsmaschine 1 gebildet Das zweite Bauteil 20 ist z.B. von einem Gehäuseteil des Hochdruckteils der Strömungsmaschine 1 gebildet.

Die Balgdichtung 30 ist bevorzugt aus einem wärmebeständigen federnden Metall oder Kunststoff hergestellt.

Die Balgdichtung 30 weist einen ersten Endabschnitt 31, mit dem sie gegen das erste Bauteil 10 abdichtet, und einen zweiten Endabschnitt 32 auf, mit dem sie gegen das zweite Bauteil 20 abdichtet.

Der erste Endabschnitt 31 ist durch Schweißen, Löten, Schrauben oder Klemmen an dem ersten Bauteil 10 befestigt, so dass eine verformungstolerante Verbindung hergestellt ist. In der gezeigten Ausführungsform ist der erste Endabschnitt 31 z.B. angeschweißt oder angelötet.

Zu diesem Zweck ist der erste Endabschnitt 31 in Form eines Flansches ausgebildet, der sich ausgehend von einem Außendurchmesser 33a eines Faltenteils 33 der Balgdichtung 30 radial auswärts über den Außendurchmesser 33a des Faltenteils 33 hinaus erstreckt und auf einer sich radial erstreckenden Dichtfläche 11 des ersten Bauteils 10 aufliegt.

Der erste Endabschnitt 31 weist ferner einen sich axial erstreckenden Verbindungsabschnitt 31a auf, der stoffschlüssig mit dem Faltenteil 33 verbunden bzw. an diesen angeformt ist, wodurch zwischen dem Faltenteil 33 und der Dichtfläche 11 des ersten Bauteils 10 ein Zwischenraum R1 gebildet ist.

Bei einem axialen Zusammenschieben der Balgdichtung 30 kann sich der Faltenteil 33 Über eine Verformung des dann als Hebelarm wirkenden

Verbindungsabschnitts 31a in den Zwischenraum R1 hinein verformen, womit die Verbindung zwischen erstem Endabschnitt 31 und erstem Bauteil 10 Verformungstoleranz bereitsellt.

Der zweite Endabschnitt 32 dichtet durch lediglichen auf axialer Vorspannung in Richtung zum zweiten Bauteil 20 hin basierenden Flächenkontakt gegen das zweite Bauteil 20 ab.

Zu diesem Zweck ist der zweite Endabschnitt 32 in Form eines Flansches ausgebildet, der sich ausgehend vom Außendurchmesser 33a des Faltenteils 33 entgegengesetzt zum ersten Endabschnitt 31 radial einwärts erstreckt und auf einer sich radial erstreckenden Dichtfläche 21 des zweiten Bauteils 20 aufliegt

An die Dichtfläche 21 des zweiten Bauteils 20 schließt sich eine Stützfläche 22 an, die sich axial in Richtung zum ersten Bauteil 10 hin erstreckt, so dass die Stützfläche 22 eine radial einwärtige Abstützung für den Faltenteil 33 bereitstellt.

Wie aus Fig.1 ersichtlich erstrecken sich die Dichtfläche 21 und die Stützfläche 22 des zweiten Bauteils 20 sowie die Dichtftäche 11 des ersten Bauteils 10 derart, dass sie gemeinsam eine U-förmige umlaufende Aufnahmetasche für den Faltenteil 33 der Balgdichtung 30 bilden, so dass der Faltenteil 33 zuverlässig gegen Beschädigungen und axiales Ausknicken geschützt ist und axial geführt ist.

### Bezugszeichenliste

- 1: Strömungsmaschine
- 10: Bauteil
- 11: Dichtfläche
- 20: Bauteil
- 21: Dichtfläche
- 22: Stützfläche
- 30: Balgdichtung
- 31: Endabschnitt
- 31a: Verbindungsabschnit
- 32: Endabschnitt
- 33: Falteniteil
- 33a: Außendurchmesser
- 40: Heißgasraum
- 50: Kühlluftraum
- R1: Zwischenraum

## Patentansprüche

1. Strömungsmaschine (1) mit zwei Bauteilen (10, 20), die über eine Balgdichtung (30) miteinander in Zusammenwirkung stehen, so dass die Balgdichtung (30) eine Mediensperre eschen zwei an die beiden Bauteile (10, 20) angrenzenden Räumen (40 ,50) der Strömungsmaschine (1) bildet,
**dadurch gekennzeichnet, dass** die Strömungsmaschine (1) als Gasturbine ausgebildet ist, wobei ein Raum (40) der beiden Räume (40 ,50) ein Heißgasraum eines Hochdruckteils der Gasturbine ist.

2. Strömungsmaschine (1) gemäß Anspruch1, wobei der andere Raum (50) der beiden Räume (40, 50) als Kühlluftraum des Hochdruckteils der Gasturbine ausgebildet ist.

3. Strömungsmaschine (1) gemäß Anspruch 1 oder 2, wobei die Balgdichtung (30) einen ersten Endabschnitt (31), mit dem sie gegen ein erstes Bauteil (10) der beiden Bauteile (10, 20) abdichtet, und einen zweiten Endabschnitt (32) aufweist, mit dem sie gegen ein zweites Bauteil (20) der beiden Bauteile (10, 20) abdichtet, und wobei der erste Endabschnitt (31) an dem ersten Bauteil (10) befestigt ist, so dass eine verformungstolerante Verbindung hergestellt ist.

4. Strömungsmachine (1) gemäß Anspruch 3, wobei der zweite Endabschnitt (32) durch lediglichen auf axialer Vorspannung basierenden Flächenkontakt gegen das zweite Bauteil (20) abdichtet

5. Strömungsmaschine (1) gemäß Anspruch 3 oder 4, wobei der erste Endabschnitt (31) an das erste Bauteil (10) angeschweißt, angelötet, angeschraubt oder angeklemmt ist.

6. Strömungsmaschine (1) gemäß einem der Anspruche 3 bis 5, wobei der erste Endabschnitt (31) in Form eines Flansches ausgebildet ist, der sich ausgehend von einem Außendurchmesser (33a) eines Faltenteils (33) der Balgdichtung (30) radial auswärts über den Außendurchmesser (33a) des Faltenteils (33) hinaus erstreckt und auf einer sich radial erstreckenden Dichtfläche (11) des ersten Bauteils (10) auflegt, und wobei der zweite Endabschnitt (32) in Form eines Flansches ausgebildet ist, der sich ausgehend vom Außendurchmesser (33a) des Faltenteils (33) entgegengesetzt zum ersten Endabschnitt (31) radial einwärts erstreckt und auf einer sich radial erstreckenden Dichtfläche (21) des zweiten Bauteils (20) aufliegt.

7. Strömungsmaschine (1) gemäß Anspruch 6, wobei der erste Endabschnitt (31) einen sich axial erstreckenden Verbindungsahschnitt (31 a) aufweist, der stoffschlüssig mit dem Faltenteil (33) verbunden ist, wodurch zwischen dem Faltenteil (33) und der Dichtfläche (11) des ersten Bauteils (10) ein Zwischenraum (R1) gebildet ist.

8. Strömungsmaschine (1) gemäß Anspruch 6 oder 7, wobei sich an die Dichtfläche (21) des zweiten Bauteils (20) eine Stützfläche (22) anschießt, die sich axial in Richtung zum ersten Bauteil (10) hin erstreckt, so dass die Stützfläche (22) eine radial einwärtige Abstützung für den Faltenteil (33) bereitstellt.

9. Strömungsmaschine (1) gemäß Anspruch 8, wobei sich die Dichtmache (21) des zweiten Bauteils (20), die Stützfläche (22) und die Dichtfläche (11) des ersten Bauteils (10) derart erstrecken, dass sie gemeinsam eine Aufnahmetasche für den Faltenteil (33) der Balgdichtung (30) bilden.

10. Strömungsmachine (1) gemäß einem der Ansprüche 3 bis 9, wobei das erste Bauteil (10) von einem Leitschaufelträger und/oder einem Dichtungsträger des Hochdruckteils der Gasturbine gebadet ist.
